# EUROPEAN PATENT APPLICATION

(11) **EP 4 725 594 A1**
(43) Date of publication of application: **15.04.2026**
(21) Application number: 24205223.1
(22) Date of filing: 08.10.2024
(51) Int. Cl.: B01J 21/08, B01D 53/94, B01J 21/12, B01J 23/42

(54) **DIESEL OXIDATION CATALYST AND A METHOD FOR ITS MANUFACTURE**

(71) Applicant: Johnson Matthey Public Limited Company, London EC2V 7AD (GB)
(72) Inventor: CHIFFEY, Andrew Francis, Royston, Hertfordshire SG8 5HE (GB); COOPER, Oliver James, Royston, Hertfordshire SG8 5HE (GB); GHOLAMI, Rahman, Royston, Hertfordshire SG8 5HE (GB); MOREAU, Francois Pierre Henri, Royston, Hertfordshire SG8 5HE (GB)
(74) Representative: Johnson Matthey Public Limited Company

(57) **Abstract**

The present invention relates to a method for the manufacture of a diesel oxidation catalyst, the method comprising:
(a) providing a washcoat comprising platinum supported on a colloidal silica support, and a platinum-group-metal-free, optionally-doped, alumina powder, wherein a mass ratio of the silica support to the alumina powder is from 2:3 to 5:1;
(b) applying the washcoat to a substrate to form a washcoat layer on at least a portion thereof; and
(c) calcining the substrate and washcoat layer to form the diesel oxidation catalyst.

## Description

The present invention relates to a Diesel Oxidation Catalyst (DOC) and to a method for its manufacture. In particular, the method provides a DOC with a reduced change in performance (delta) between its fresh and aged conditions. This is desirable to ensure that an exhaust system can be optimally configured for consistent performance across the lifetime of the part. For example, it can assist with programming of an engine control unit to account for a loss of DOC NO oxidation activity, which can drive improved NOx conversion on a downstream selective catalytic reduction (SCR) catalyst, by changing a rate of nitrogenous reductant injection to compensate therefor.

Combustion engines produce exhaust gases that contain pollutants, such as carbon monoxide (CO), unburned hydrocarbons (HCs), oxides of nitrogen (NOx) and particulate matter (PM). Emissions standards for pollutants in an exhaust gas produced by a combustion engine, particularly for vehicular engines, are becoming increasingly stringent. There is a need to provide improved catalysts and exhaust systems for treating and removing the pollutants in such exhaust gases that can meet these standards and which are cost-effective. It is particularly desirable that these catalysts show consistent performance over their lifetime.

The exhaust gas from gasoline and diesel engines is commonly treated with a catalyst that can oxidise (i) carbon monoxide (CO) to carbon dioxide (CO₂); and (ii) hydrocarbons (HCs) to water (H₂O) and carbon dioxide (CO₂). The exhaust gas from a compression ignition engine, such as a diesel engine, is typically treated with an oxidation catalyst (commonly called a diesel oxidation catalyst (DOC)) that performs oxidation reactions (i) and (ii).

Oxidation catalysts for compression ignition internal combustion engines typically contain one or more platinum group metals. The specific platinum group metal(s) selected for inclusion in an oxidation catalyst will depend on a variety of factors, such as reactivity toward specific pollutants and under differing exhaust gas conditions, cost, durability at high temperatures, chemical compatibility with the support material and any other components of the catalyst, and susceptibility to poisoning by impurities. For example, platinum group metals (PGMs) such as platinum (Pt) and palladium (Pd) are each able to oxidise carbon monoxide (CO) and hydrocarbons (HCs) in an exhaust gas from a compression ignition engine. Palladium is more susceptible to poisoning by sulfur in fuel compared to platinum but has greater thermal durability.

Strategies for meeting current emissions standards for heavy-duty diesel engines typically adopt an exhaust system architecture comprising a series of catalysed substrates and injectors. In order, from upstream to downstream (upstream being relative to an engine connected or connectable to the exhaust system), a typical exhaust system comprises a hydrocarbon fuel injector, a diesel oxidation catalyst (DOC), a catalysed soot filter (CSF, i.e. a catalysed diesel particulate filter (DPF)), a urea (ammonia precursor) injector, one or more selective catalytic reduction (SCR) catalyst and an ammonia slip (ASC) catalyst, also known as an ammonia oxidation (AMOX) catalyst.

As well as performing the above reactions (i) and (ii), some diesel oxidation catalysts are also able to oxidise nitrogen monoxide (NO) to nitrogen dioxide (NO₂), which can aid removal of NOx using an additional, downstream emissions control device. During normal operation the aim of a DOC is to control CO and HC emissions and to promote the conversion of NO to NO₂ for downstream passive filter regeneration (the combustion of particulate matter held on a filter in NO₂ at lower exhaust gas temperatures than in O₂ in the exhaust gas, i.e. the so-called CRT^{®} effect) or SCR catalyst performance optimisation.

SCR catalysts are designed to catalyse the reduction of NOx selectively using a nitrogenous reductant, typically this may be derived from an ammonia precursor such as urea, which reductant is injected into a flowing exhaust gas upstream from the SCR catalyst in an amount to promote the principal NOx reduction reactions of:
(1) 4NH₃ + 4NO + O₂ → 4N₂ + 6H₂O;
(2) 4NH₃ + 2NO₂ + O₂ → 3N₂ + 6H₂O; and
(3) NO + NO₂ + 2 NH₃ → 2N₂ + 3/2H₂O (the preferred, so-called "fast SCR reaction").

It will be understood that each of reactions (1)-(3) can occur in parallel, but the kinetically fastest reaction will be favoured. Therefore, in an exhaust gas containing a NO₂:NOx ratio of 0.5, the kinetically favoured fast SCR reaction dominates. Therefore, it is desirable to have the upstream DOC having an NO₂ production function.

During its lifetime an exhaust catalytic article is exposed to harsh conditions which can lead to a deterioration in performance. This is typically caused by high temperatures, especially during exotherm generation events, and due to the presence of sulphur and moisture in the exhaust gases. It is desirable for manufacturers to have exhaust systems that can maintain a more constant level of performance across the lifetime of the exhaust system. This simplifies the configuration and mapping of the engine and exhaust system, including HC or ammonia dosing, such that significant savings can be achieved and emissions standards can be reliably surpassed. It can even be the case that a reduced fresh performance can be accepted, provided that the performance of the part remains more stable in the aged state (i.e. the delta in the performance is lower).

Accordingly, it is an object of the present invention to provide an improved diesel oxidation catalyst with more stable performance (lower delta), especially as regards NO oxidation performance, or at least to tackle problems associated therewith in the prior art or provide a commercially viable alternative thereto.

According to a first aspect there is provided a method for the manufacture of a diesel oxidation catalyst, the method comprising:
(a) providing a washcoat comprising platinum supported on a colloidal silica support, and a platinum-group-metal-free, optionally-doped, alumina powder, wherein a mass ratio of the silica support to the alumina powder is from 2:3 to 5:1;
(b) applying the washcoat to a substrate to form a washcoat layer on at least a portion thereof; and
(c) calcining the substrate and washcoat layer to form the diesel oxidation catalyst.

The present disclosure will now be described further. In the following passages different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous. It is intended that the features disclosed in relation to the method may be combined with those disclosed in relation to the exhaust system and *vice versa.*

In recent years it has been increasingly common to provide DOCs having a layered or zoned configuration. These different configurations permit the optimal use of the components being used (often thrifting PGMs) or the best performance of the catalyst article. As discussed above, the DOC may be required to perform a number of competing reactions, including the oxidation of CO, HC and NO. The reaction thermodynamics and kinetics tend to favour the CO and HC reactions, such that the NO oxidation is generally tackled by a rear zone of such parts, i.e. CO and HC oxidation reactions are favoured in a front zone.

Since the NO oxidation performance of a DOC can be critical to the performance of downstream catalyst parts, such as an SCR catalyst, it is desirable that the DOC's NO performance is less variable between fresh and aged states. The inventors have therefore sought to provide a DOC with more consistent NO oxidation performance when fresh and aged (i.e. a smaller performance delta).

It is extremely common for the rear zones of DOCs to contain one or more PGMs on an alumina support material. Alumina substrates, especially those doped with stabilising elements such as La or Si, are well known to provide a stable support material for holding the PGMs in the part. The inventors have found that alternative materials such as pure silica are generally less suitable supports, in particular, being less stable to hydrothermal aging.

The inventors have surprisingly found that by fixing Platinum (Pt) onto a silica support and then employing it in the presence of a conventional alumina support material (especially silica-doped alumina), it is possible to achieve a smaller performance delta between fresh and aged catalyst states. Without wishing to be bound by theory, it is believed that the Pt when fresh is surrounded primarily by the silica in the washcoat layer structure. This suppresses the initial performance. During aging the Pt can at least partially migrate to the alumina, providing a stable continuance of the similar performance levels. If the alumina were not present or if there was only silica present, then it is understood that the performance would start at a higher level and fall further, i.e. a larger delta, than in the presence of both alumina and silica.

It should be noted that silica is often used in small amounts (<10wt%) as a binder in washcoats. The silica in the present invention is used in a much higher amount, as required by the mass ratio (2:3 represents about 40wt% of the final layer). It is also noted that the pre-fixing of the Pt on the silica gives a different local environment to the Pt, compared to applying it to, for example, a silica-rich silica-doped alumina material. It is this initial environment and how it changes during ageing that appears to be key to achieving the low delta in NO oxidation.

The first aspect relates to a method for the manufacture of a diesel oxidation catalyst, also known as a DOC. DOCs are well known components of exhaust gas treatment systems. They are typically provided as a single catalyst article, sometimes referred to as a "brick", and as a flow-through monolith substrate, also referred to as a honeycomb substrate.

The method comprises a first step of (a) providing a washcoat. A washcoat is a suspension of solids that is applied to a substrate before drying and calcining. The washcoat composition therefore comprises the intended solids for the final washcoat layer in a solvent, typically water.

The washcoat comprises platinum as an active component of the final catalyst. Preferably the Pt is the only platinum group metal in the washcoat layer. Preferably the Pt is present in an amount of from 1 to 30gft⁻³, preferably from 2 to 20 gft³, more preferably 7 to 15gft⁻³. In some embodiments, such as in DOC having further upstream washcoat layers, the Pt may be present in a larger amount in the washcoat layer, such as 20 to 30gft⁻³

The platinum is supported on a colloidal silica support. By colloidal it is meant that the particle size is very fine and it is typically used in the washcoat as a sol. Preferably the colloidal silica has a mean particle size (D50) of from 10 to 40nm, preferably 20 to 30nm. Particle sizes can be calculated from the surface area (i.e., using techniques known in the art such as converting BET surface area into particle size). Preferably the colloidal silica has a surface area of from 50 to 200m²/g, preferably 100 to 160m²/g, 130 to 150m²/g. This may be measured by using standard 5 points BET nitrogen adsorption. Preferably the washcoat layer comprises the silica support in an amount of from 0.5 to 1.2gin⁻³. The silica support is preferably at least 90wt% silica, more preferably at least 95wt% silica, more preferably at least 99wt% silica and most preferably consists essentially of silica.

The colloidal silica may be provided as a suspension or sol, in order to ensure good mixing and dissolution. The pH of such a suspension, measured at room temperature, is typically in the range of 8 to 10, preferably about 9. The suspension may comprise ammonia/ammonium hydroxide as a stabiliser.

The washcoat also comprises a platinum-group-metal-free, optionally-doped, alumina powder. Suitable alumina powders are well known in the art. The inclusion of a dopant may stabilise the alumina or promote catalytic reaction of the supported platinum group metal. Typically, the dopant may be selected from the group consisting of zirconium (Zr), titanium (Ti), silicon (Si), yttrium (Y), lanthanum (La), praseodymium (Pr), samarium (Sm), neodymium (Nd), barium (Ba) and an oxide thereof.

When the alumina is doped with a dopant, then typically the alumina comprises a total amount of dopant of 0.1 to 10 % by weight. It is preferred that the total amount of dopant is 0.25 to 7 % by weight, more preferably 2.5 to 6.0 % by weight. Preferably the dopant is silica, because oxidation catalysts comprising such support materials in combination with platinum group metals and alkaline earth metals promote oxidation reactions, such as CO and hydrocarbon oxidation.

Preferably the alumina has a particle size (D90) of from 2 to 60 µm, preferably 5 to 30 µm, more preferably from 12 to 18 µm and most preferably about 15 µm. Particle sizes can be measured using standard laser light scattering measurement. Preferably the alumina has a surface area of from 75 to 200 m²/g, preferably 140 to 180 m²/g. This may be measured by using standard 5 points BET nitrogen adsorption. The measurements are taken on the fresh alumina before use. Preferably the alumina has a porosity, as measured by nitrogen desorption or equivalent of 0.3 to 2mL/g, preferably 0.5 to 1mL/g and most preferably 0.6 to 0.8mL/g.

Preferably the alumina powder is alumina doped with silica, wherein the alumina powder is doped with from 1 to 20wt% silica, based on a total weight of the alumina powder. Preferably the silica is from 2 to 10wt% of the alumina, more preferably 3 to 7wt% and most preferably about 5wt% silica, based on a total weight of the alumina powder.

Preferably the washcoat layer comprises the alumina powder in an amount of from 0.5 to 1gin⁻³.

A mass ratio of the silica support to the alumina powder in the washcoat is from 2:3 to 5:1. This ratio is a dry weight ratio, such that any suspending liquid forming part of the colloidal silica ingredient is not included in the mass ratio. Preferably the mass ratio of the silica support to the alumina powder is from 4:5 to 4:1, preferably 9:11 to 4:1, preferably 1:1 to 2:1. The ratio determines the relative amount of the Pt support when fresh and defines the availability of the alumina as a secondary support as the article ages. It has been found that these ratios are associated with good performance and a small performance delta.

It is well known that when preparing a washcoat it is possible to include further ingredients which are conventional in forming washcoat slurries. These include one or more of a binder and a thickening agent. Binders may include, for example, an oxide material with small particle size to bind the individual insoluble particles together in washcoat slurry. The use of binders in washcoats is well known in the art. Thickening agents may include, for example, a natural polymer with functional hydroxyl groups that interacts with insoluble particles in washcoat slurry. It serves the purpose of thickening washcoat slurry for the improvement of coating profile during washcoat coating onto substrate. It is usually burned off during washcoat calcination. Examples of specific thickening agents / rheology modifiers for washcoats include galactomannan gum, guar gum, xanthan gum, curdlan schizophyllan, scleroglucan, diutan gum, Whelan gum, hydroxymethyl cellulose, carboxymethyl cellulose, hydroxyethyl cellulose, methyl cellulose, methyl hydroxyethyl cellulose, methyl hydroxypropyl cellulose and ethyl hydroxycellulose.

The method comprises a further step of (b) applying the washcoat to a substrate to form a washcoat layer on at least a portion thereof. Methods of washcoating are well known in the art. The method typically involves a step of applying the washcoat slurry to at least a portion of the substrate to form a washcoated substrate. Disposing the slurry on a substrate may be carried out using techniques known in the art. Typically, the slurry may be poured into the inlet of the substrate using a specific moulding tool in a predetermined amount, thereby disposing the loaded support material on the substrate. As discussed in more detail below, subsequent vacuum and/or air knife and/or and drying steps may be employed during the disposition step. When the support is porous, the loaded support material may be disposed on the walls, within the walls or both.

Suitable substrates for DOCs are well known in the art. Preferably the substrate is a flow-through substrate. Such a substrate has a plurality of channels extending between the inlet end and the outlet end. The plurality of channels extends in the longitudinal direction and provide a plurality of inner surfaces (e.g. the surfaces of the walls defining each channel). In a flow-through substrate, each of the plurality of channels has an opening at the inlet end and an opening at the outlet end. In contrast, in a wall-flow filter substrate, alternate inlet and outlet ends are blocked, forcing the exhaust gas entering at the inlet end to travel through the walls of the channels.

The channels of the substrate may be of a constant width and each plurality of channels may have a uniform channel width. Preferably within a plane orthogonal to the longitudinal direction, the monolith substrate has from 300 to 900 channels per square inch, preferably from 400 to 800. For example, on the first face, the density of open first channels and closed second channels is from 600 to 700 channels per square inch. The channels can have cross sections that are rectangular, square, circular, oval, triangular, hexagonal, or other polygonal shapes.

The monolith substrate acts as a support for coated catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that a monolith substrate described herein is a single component (i.e. a single brick), nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

Preferably the washcoat layer is provided only on a rear portion of the substrate. This is the zone of a DOC that is typically used to treat NO in the exhaust gases. Preferably the washcoat layer is provided on from 20 to 80% of a longitudinal length of the substrate, extending from an outlet face. It should be appreciated that a layer which covers less than 100% of the longitudinal length of the substrate may be considered to be a zone. Preferably the washcoat layer is provided on 30 to 60% of the length, more preferably 35 to 50% of the length.

In such embodiments, where the washcoat layer forms a zone, there may be one or more further washcoat zones provided on the substrate. Indeed, in most DOCs it is preferred that there are one or more further washcoat zones that, together, cover the whole longitudinal length of the substrate.

Preferably there is a further washcoat applied in a zone extending from the upstream end, such as from 20 to 80% of the longitudinal length. Preferably the further washcoat comprises a combination of Pt and Pd on a substrate. The provision of such a washcoat zone serves to oxidise the HC and CO components of the exhaust gas to be treated.

The method comprises a further step of (c) calcining the substrate and washcoat layer to form the diesel oxidation catalyst. It should be appreciated that the calcination step fixes the washcoat to its substrate. This may be desirably formed multiple times between each washcoat layer application and formation step. That is, step (c) does not preclude the presence of further steps of applying washcoats and calcining them, such as to form a DOC having multiple different zones or layers.

The term "calcine", or "calcination", means heating the material in air or oxygen. This definition is consistent with the IUPAC definition of calcination. (IUPAC. Compendium of Chemical Terminology, 2nd ed. (the "Gold Book"). Compiled by A. D. McNaught and A. Wilkinson. Blackwell Scientific Publications, Oxford (1997). XML on-line corrected version: http://goldbook.iupac.org (2006-) created by M. Nic, J. Jirat, B. Kosata; updates compiled by A. Jenkins. ISBN 0-9678550-9-8. doi: 10.1351/goldbook). The temperatures used in calcination depend upon the components in the material to be calcined and generally are between about 400°C to about 900°C for approximately 1 to 8 hours. In some cases, calcination can be performed up to a temperature of about 1200°C. In applications involving the processes described herein, calcinations are generally performed at temperatures from about 400°C to about 700°C for approximately 1 to 8 hours, preferably at temperatures from about 400°C to about 650°C for approximately 1 to 4 hours. The calcining step in air serves to burn out the organic pore-former and this leaves the voids in the remaining washcoat layer.

Calcining is typically carried out in an oven or furnace, more typically a belt or static oven or furnace, typically in hot air at a specific flow from one direction. The calcining may also comprise an initial drying step. The drying and calcination steps may be continuous or sequential. For example, a separate washcoat may be applied after the substrate is already washcoated and dried with a previous washcoat. A washcoated substrate can also be dried and calcined using one continuous heating program if coating is completed. As a result of the heating (calcination), the substrate is typically substantially free of organic compounds, more typically completely free of organic compounds.

Following the heating step, the substrate is typically cooled, more typically to room temperature. The cooling is typically carried out in air with or without cooling agent/media, typically without cooling agent.

Preferably step (a) comprises: (A) providing a first solution comprising colloidal silica and a platinum salt, the first solution having a first pH of less than 3; (B) adding an alkali to the first solution to form a second solution having a second pH, the second pH being more than 6, preferably about 7; (C) adding the alumina powder to the second solution to form the washcoat.

The pH change serves to fix the Pt onto the silica. This ensures that the silica is acting as the Pt support before the washcoating and calcining steps. The normal pH for washcoating procedures is typically below 4, more generally below 3. In contrast, here the pH is increased by the addition of an alkali, preferably ammonia. Other alkalis can be used.

Preferably step (C) further comprises adding a dispersant to the second solution and wherein the washcoat has a third pH which is at least 4, preferably at least 5 and more preferably at least 5.5. Suitable dispersants are known in the art and include weak acids such as citric acid (or salts thereof). The addition of such dispersants are not intended to significantly lower the pH, but help to distribute the species in the washcoat and ensure a homogeneous distribution of the silica and alumina.

According to a further aspect, there is provided a diesel oxidation catalyst comprising a washcoat layer on a substrate, the washcoat layer comprising:
(i) platinum, as the only platinum group metal, in an amount of 1 to 30gft⁻³,
(ii) silica supporting substantially all of the platinum; and
(iii) a substantially platinum-group-metal-free, optionally-doped alumina,
wherein the platinum-supporting-silica forms 40 to 70wt% of the washcoat layer.

The washcoat layer is preferably a zone, as discussed above. The Pt content is preferably from 2 to 20 gft⁻³ or more preferably from 5 to 15 gft⁻³ in embodiments where the washcoat layer covers the whole substrate. In embodiments where there is an upstream zone, the Pt content in the downstream NO-oxidation zone may be higher, such as 20 to 30 gft⁻³.

Preferably the diesel oxidation catalyst is obtainable by the method described herein. It will be appreciated that in a final calcined product it no longer makes as much sense to discuss the silica and the alumina as support materials as the washcoat layer sinters together. However, because of the method steps, the platinum will be more closely associated with and surrounded largely by the silica. As a consequence, while the structure of the final product is difficult to describe, it is possible to determine that the product has unique characteristics, based on the starting use of silica as the support material.

According to a further aspect, there is provided an exhaust gas treatment system comprising the diesel oxidation catalyst described herein. Preferably the system further comprises a downstream SCR catalyst article. The downstream SCR catalyst article may be an SCR or an SCRF (i.e. a SCR catalyst washcoated on a filter substrate). Preferably there is provided a means for injecting a nitrogenous reductant, such as ammonia, downstream of the DOC and upstream of the SCR article.

According to a further aspect, there is provided a vehicle comprising a diesel engine and an exhaust system described herein.

According to a preferred embodiment a method for the manufacture of a diesel oxidation catalyst, the method comprising:
(a) providing a washcoat comprising platinum supported on a colloidal silica support, and a platinum-group-metal-free, optionally-doped, alumina powder, wherein a mass ratio of the silica support to the alumina powder is from 2:3 to 5:1;
(b) applying the washcoat to a substrate to form a first washcoat layer on a downstream portion thereof extending from 20-80% of a longitudinal length of the substrate; and
(c) calcining the substrate and washcoat layer to form the diesel oxidation catalyst,
the method further comprising forming a second washcoat layer, comprising a combination of Pt and Pd and optionally-doped, alumina powder support, on an upstream portion thereof extending from 20-80% of a longitudinal length of the substrate.

In this embodiment there is also provided a diesel oxidation catalyst comprising at least first and second washcoat layers on a substrate, the first washcoat layer comprising:
(i) platinum, as the only platinum group metal, in an amount of 1 to 30gft⁻³,
(ii) silica supporting substantially all of the platinum; and
(iii) a substantially platinum-group-metal-free, optionally-doped alumina,
wherein the platinum-supporting-silica forms 40 to 70wt% of the washcoat layer, the second washcoat layer comprising:
(i) platinum and palladium,
(ii) an optionally-doped alumina support,
wherein the first washcoat layer on a downstream portion extending from 20-80% of a longitudinal length of the substrate, and wherein the second washcoat layer is on an upstream portion extending from 20-80% of a longitudinal length of the substrate.

### Figures

The invention will now be described further in relation to the following non-limiting figures:

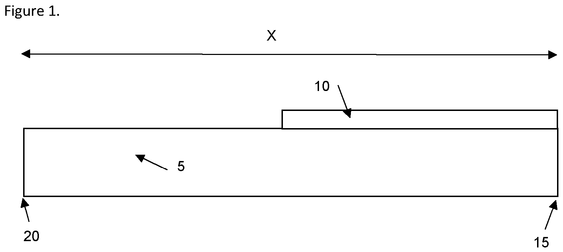

Figure 1 shows a configuration of a DOC as described herein.

The DOC comprises a flow-through substrate 5. On the substrate 5 is provided a first washcoat layer 10. This extends from a rear face15 towards a front face 20 of the substrate by a distance of about 50% of a longitudinal length X. The longitudinal length X extends from the front face 20 to the rear face 15 of the substrate 5. The composition of the washcoat layer is discussed herein and demonstrated in the examples.

### Examples

The invention will now be illustrated by the following non-limiting examples.

### Materials

All materials are commercially available and were obtained from known suppliers, unless noted otherwise.

### Example Preparation

### Preparation of [Al₂O₃.SiO₂].Pt- Composition A

1.4 g/in³ [Al₂O₃.SiO₂] was made into a slurry with distilled water and then milled to reduce the average particle size (d₉₀ = 10-14 µm). To the slurry, 200g/ft³ citric acid and 10 g/ft³ Pt nitrate were added and the mixture was stirred until homogenous. The Pt was allowed to adsorb onto the support for 1 hour.

### Preparation [Al₂O₃.SiO₂].Pt.[SiO₂] - Composition 8

1.4 g/in³ [Al₂O₃.SiO₂] was made into a slurry with distilled water and then milled to reduce the average particle size (d₉₀ = 10-14 µm). To the slurry, 200g/ft³ citric acid and 10 g/ft³ Pt nitrate were added and the mixture was stirred until homogenous. The Pt was allowed to adsorb onto the support for 1 hour, followed by the addition of 0.8 g/in³ of colloidal silica.

### Preparation of [SiO₂].Pt.[Al₂O₃.SiO₂] - Composition C

0.8 g/in³ [SiO₂] was made into a slurry with distilled water. To the slurry, 10 g/ft³ Pt nitrate was added and the mixture was stirred until homogenous. The Pt was allowed to adsorb onto the support for 1 hour, followed by adjusting the pH between 6-7. To the slurry, 1.4 g/in³ [Al₂O₃.SiO₂], pre-milled to reduce the average particle size (d₉₀ = 10-14 µm) and 200g/ft³ citric acid were added, with mixing to homogeneity.

### Preparation of [SiO₂].Pt.[Al₂O₃.SiO₂] - Composition D

0.8 g/in³ [SiO₂] was made into a slurry with distilled water. To the slurry, 10 g/ft³ Pt nitrate was added and the mixture was stirred until homogenous. The Pt was allowed to adsorb onto the support for 1 hour, followed by adjusting the pH between 6-7. To the slurry, 1.0 g/in³ [Al₂O₃.SiO₂], pre-milled to reduce the average particle size (d₉₀ = 10-14 µm) and 200g/ft³ citric acid were added, with mixing to homogeneity.

### Preparation of [SiO₂].Pt.[Al₂O₃.SiO₂] - Composition E

0.8 g/in³ [SiO₂] was made into a slurry with distilled water. To the slurry, 10 g/ft³ Pt nitrate was added and the mixture was stirred until homogenous. The Pt was allowed to adsorb onto the support for 1 hour, followed by adjusting the pH between 6-7. To the slurry, 0.2 g/in³ [Al₂O₃.SiO₂], pre-milled to reduce the average particle size (d₉₀ = 10-14 µm) and 200g/ft³ citric acid were added, with mixing to homogeneity.

### Experimental results

Catalysts A, B and C were tested fresh and aged (550°C/100hr). Catalysts A, D and E were tested fresh and aged (650°C/50hr). They were performance tested over light off tests on a laboratory synthetic catalytic activity test (SCAT) apparatus.

As can be seen from the results presented in Table 1, while the fresh (i.e. conditioned) performance was generally higher on the conventional parts (Pt supported on doped alumina), there was a significant drop-off in performance after aging, especially after aging at a higher temperature.

### Example 1

**Table 1**

| **Catalyst** | **NO₂:NOx at 250°C (%)** | | |
|---|---|---|---|
| | ***Conditioned*** | ***Aged (550°C*/*100hr)*** | ***Conditioned to aged Delta (°C)*** |
| A (comparative) | 43.7 | 32.3 | 11.4 |
| B (comparative) | 34.5 | 20.4 | 14.1 |
| C (inventive) | 35.1 | 30.6 | 4.5 |

### Example 2

**Table 2**

| **Catalyst** | **NO₂:NOx at 250°C (%)** | | |
|---|---|---|---|
| | ***Conditioned*** | ***Aged (650°C*/*50hr)*** | ***Conditioned to aged Delta (°C)*** |
| A (comparative) | 39 | 25.3 | 13.7 |
| D (inventive) | 31.2 | 23.8 | 7.4 |
| E (inventive) | 29.2 | 22.5 | 6.6 |

### DEFINITIONS

As used herein, the singular form of "a", "an" and "the" include plural references unless the context clearly dictates otherwise.

The use of the term "comprising" is intended to be interpreted as including such features but not excluding other features and is also intended to include the option of the features necessarily being limited to those described. In other words, the term also includes the limitations of "consisting essentially of" (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise.

As used herein, the term "on" is intended to mean "directly on" such that there are no intervening layers between one material being said to be "on" another material. Spatially relative terms, such as "below", "beneath", "lower", "above", "upper" and the like, may be used herein for ease of description to describe one element or feature's relationship to another element(s) or feature(s). It will be understood that the spatially relative terms are intended to encompass different orientations of the catalyst in use or operation in addition to the orientation depicted in the figures.

The foregoing detailed description has been provided by way of explanation and illustration and is not intended to limit the scope of the appended claims. Many variations in the presently preferred embodiments illustrated herein will be apparent to one of ordinary skill in the art and remain within the scope of the appended claims and their equivalents.

For the avoidance of doubt, the entire contents of all documents acknowledged herein are incorporated herein by reference.

## Claims

1. A method for the manufacture of a diesel oxidation catalyst, the method comprising:
(a) providing a washcoat comprising platinum supported on a colloidal silica support, and a platinum-group-metal-free, optionally-doped, alumina powder, wherein a mass ratio of the silica support to the alumina powder is from 2:3 to 5:1;
(b) applying the washcoat to a substrate to form a washcoat layer on at least a portion thereof; and
(c) calcining the substrate and washcoat layer to form the diesel oxidation catalyst.

2. The method according to claim 1, wherein step (a) comprises:
(A) providing a first solution comprising colloidal silica and a platinum salt, the first solution having a first pH of less than 3;
(B) adding an alkali to the first solution to form a second solution having a second pH, the second pH being more than 6, preferably about 7;
(C) adding the alumina powder to the second solution to form the washcoat;

3. The method according to claim 2, wherein step (C) further comprises adding a dispersant to the second solution and wherein the washcoat has a third pH which is at least 4.

4. The method according to any preceding claim wherein the colloidal silica has a mean particle size (D50) of from 10 to 40nm and/or a surface area of from 75 to 200m²/g.

5. The method according to any preceding claim wherein the alumina has a particle size (D90) of from 2 to 60 µm and/or a surface area of from 75 to 200 m²/g.

6. The method according to any preceding claim, wherein the Pt is present in an amount of from 1 to 30gft⁻³, preferably 7 to 15gft⁻³, and/or wherein the Pt is the only platinum group metal in the washcoat layer.

7. The method according to any preceding claim, wherein the washcoat layer comprises the silica support in an amount of from 0.5 to 1.2gin⁻³, and/or the alumina powder in an amount of from 0.5 to 1gin⁻³.

8. The method according to any preceding claim, wherein the alumina powder is alumina doped with silica, wherein the alumina powder is doped with from 1 to 20wt% silica, based on a total weight of the alumina powder.

9. The method according to any preceding claim, wherein the mass ratio of the silica support to the alumina powder is from 9:11 to 4:1, preferably about 1:1.

10. The method according to any preceding claim, wherein the washcoat layer is provided only on a rear portion of the substrate, preferably on from 20 to 80% of a longitudinal length of the substrate, extending from an outlet face.

11. The method according to any preceding claim, wherein the substrate is a flow-through substrate.

12. A diesel oxidation catalyst comprising a washcoat layer on a substrate, the washcoat layer comprising:
(i) platinum, as the only platinum group metal, in an amount of 1 to 30gft⁻³,
(ii) silica supporting substantially all of the platinum; and
(iii) a substantially platinum-group-metal-free, optionally-doped alumina,
wherein the platinum-supporting-silica forms 40 to 70wt% of the washcoat layer.

13. The diesel oxidation catalyst according to claim 12, obtainable by the method according to any of claims 1 to 11.

14. An exhaust gas treatment system comprising the diesel oxidation catalyst according to claim 12 or claim 13, preferably wherein the system further comprises a downstream SCR catalyst article.

15. A vehicle comprising a diesel engine and an exhaust system according to claim 14.
